# EUROPEAN PATENT SPECIFICATION

(11) **EP 3 540 904 B1**
(45) Date of publication and mention of the grant of the patent: **30.12.2020**
(21) Application number: 19162387.5
(22) Date of filing: 12.03.2019
(51) Int. Cl.: H02J 7/00, H01M 10/48, B60L 58/10, H01M 2/36, H01M 10/06, H01M 10/42

(54) **ELECTRIC CHARGE ACCUMULATOR**
ELEKTRISCHER LADEAKKU
ACCUMULATEUR DE CHARGES ÉLECTRIQUES

(30) Priority: 13.03.2018 IT 201800003512
(43) Date of publication of application: 18.09.2019
(73) Proprietor: Aton S.r.l., 47923 Rimini (RN) (IT)
(72) Inventor: UGUZZONI, Ettore, 47923 Rimini (RN) (IT); NERVOSI, Mauro, 47923 Rimini (RN) (IT)
(74) Representative: Luppi, Emanuele

(56) References cited:
- DE-A1- 2 618 047
- US-B1- 9 893 391

## Description

The present invention relates to an electric charge accumulator.

It is well known that charge accumulators and traction batteries are used to provide power for the movement of vehicles, such as electric cars, motors for trailers, pallet trucks, forklift trucks and the like.

One type of traction battery that is generally used consists of flooded batteries, which represent a particular category of lead-acid accumulators, which are among the most popular accumulators on the market and represent a widely tested technology.

They consist of two lead electrodes or plates, in particular one lead electrode and one lead dioxide electrode, immersed in an aqueous electrolytic solution of sulphuric acid at fixed concentration.

In the particular case of flooded batteries, the products of the oxido-reduction reactions that take place inside the battery have the possibility of coming into contact with the external environment.

These electric charge accumulators do however have a number of drawbacks.

In fact, the exceeding energy supplied to the system during the charge accumulation phase causes the electrolysis of the water of the electrolytic solution, with the formation of hydrogen and oxygen.

This reaction tends to self-support by raising the temperature due to the passage of the current and contributes to the evaporation of water of the electrolytic solution, increasing the concentration of sulphuric acid in the solution and leaving the plates uncovered.

The latter, in contact with the air and in the presence of a more concentrated solution of sulphuric acid, undergo the phenomenon of sulphation, i.e. the reaction of lead from which the plates are made to form lead sulphate, which ends up covering the plates themselves.

This phenomenon causes the reduction of the active surface of the plates, with the consequent reduction in the speed of the electrochemical reactions and the consequent progressive worsening of the accumulator's performance. Moreover, the sulphation of the plates causes the progressive deterioration of the accumulator itself, event until the elements break which causes the short circuit.

In order to avoid this drawback, regular maintenance is necessary to replenish the evaporated water.

In fact, the accumulators of this type are provided with introduction openings for the periodic topping up of water, so as to maintain the correct level of aqueous solution and not leave the plates uncovered.

Some electric charge accumulators are also provided with a level probe, i.e. a lead rod which, being positioned vertically and immersed in the electrolytic solution, measures the level thereof.

This probe, on the contrary, being immersed in a highly aggressive solution, tends to oxidize and to undergo sulfation, so it should be periodically disassembled and cleaned.

Transport and lifting vehicles, such as forklift trucks and pallet trucks, are often hired from suppliers, and it often happens that operators neglect to maintain the electric charge accumulator, with a consequent increase in the occurrence of breakdowns and deteriorations, which cause the increase in the costs of replacing the accumulator.

In addition, the malfunction of the electric charge accumulator due to lack of maintenance can also cause damage to the vehicle on which it is mounted, in particular related to the short circuit of the accumulator itself, resulting in considerable economic damage. US9893391B1 discloses an electric battery for a vehicle.

The main aim of the present invention is to devise an electric charge accumulator that allows avoiding the risk of failure and breakage during use, providing information on the maintenance to be carried out.

Within the illustrated aim, one object of the present invention is to allow real-time monitoring of the level of electrolytic solution inside the electric charge accumulator.

A further object of the present invention is to allow the performance improvement of the electric charge accumulator.

Another object of the present invention is to allow the increase in the average lifespan of the electric charge accumulator itself.

Another object of the present invention is to devise an electric charge accumulator that allows overcoming the mentioned drawbacks of the prior art in a simple, rational, easy, effective to use and cost effective solution.

The above objects are achieved by the present electric charge accumulator according to claim 1.

Other characteristics and advantages of the present invention will be more evident from the description of a preferred, but not exclusive, embodiment of an electric charge accumulator, illustrated by way of an indicative, yet non-limiting example, in the attached tables of drawings in which:

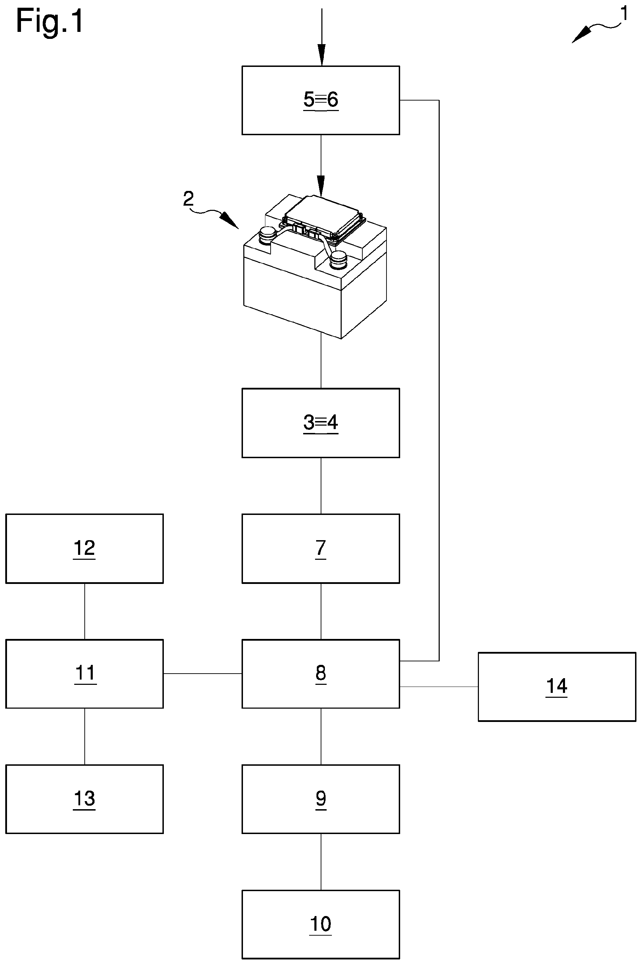

Figure 1 is a schematic view of the electric charge accumulator according to the invention;
Figure 2 is a flow diagram showing the operation of a first embodiment of the electric charge accumulator;
Figure 3 is a flow diagram showing the operation of a second embodiment of the electric charge accumulator.

With particular reference to these illustrations, reference numeral 1 globally indicates an electric charge accumulator.

The electric charge accumulator 1, according to the invention, comprises at least one flooded electric battery 2 containing at least one electrolytic solution comprising water and mounted on board a vehicle, for the power supply of the vehicle itself, wherein such an electric battery has a predetermined operating time capacity Lₐ.

As mentioned above, the flooded electric battery 2 is a particular type of lead-acid battery, which contains the aqueous electrolytic solution of sulphuric acid at fixed concentration within a range established by the manufacturer, within which two lead electrodes are immersed.

The heat produced during operation causes the evaporation of the water contained in the electrolytic solution.

Such a flooded electric battery 2 is not however hermetically sealed with respect to the external environment, so that the evaporated water escapes from the electric battery itself, thus causing a change in the amount of electrolytic solution, resulting in increased concentration during use.

In order to keep the amount and concentration of the electrolytic solution within the established values, this type of device, therefore, requires the periodic replenishment of the evaporated water, which can be carried out through the topping up openings made on the electric battery 2 that are closed through the plugs, to prevent the accidental leakage of the liquid.

When, in fact, the amount of evaporated water becomes high, the concentration of the electrolytic solution reaches such high levels that lead sulphate is deposited on the electrodes, the lead sulphate being formed by the electrolytic reactions that take place inside the electric battery 2.

This phenomenon is called sulphation and consists in the formation of a crystalline layer of lead sulphate which causes a significant increase in the internal electric resistance, with a consequent increase in the voltage drop inside the electric battery 2 and malfunction of the same.

In the particular embodiment shown, the predetermined operating time capacity Lₐ coincides with the maximum volume of water that can evaporate during operation so that the concentration values of the electrolytic solution remain within the desired range, so this is a figure provided for by the manufacturer. The electric charge accumulator 1 usefully comprises at least one charging plane on which the electric battery 2 rests, which is held in place by means of fastening means, so as to have a stable support during use, while the charging plane itself is anchored to the vehicle floor.

Also according to the invention, the electric charge accumulator 1 comprises acquisition means 3 for acquiring the current electric charge Cₙ delivered by the electric battery 2 in a current cycle of use.

It should be specified that, in the context of the present discussion, the words "cycle of use" mean the series of operations that take place between the beginning of the use of the electric battery 2 to power the vehicle and the topping up of water which is necessary for the correct operation of the electric battery itself.

In particular, during a cycle of use, the electric battery 2 is able to deliver a limited electric charge that allows the vehicle to be powered for a limited period of time.

The acquisition means 3 allow, therefore, measuring the electric charge delivered by the electric battery 2 in the current cycle of use, acquiring the value of the current electric charge Cₙ.

In addition, according to the invention, the electric charge accumulator 1 comprises detection means 4 for detecting the previous electric charge Cₙ₋₁ delivered by the electric battery 2 in a previous cycle of use.

In other words, the detection means 4 allow storing the amount of water introduced and the electric charge delivered by the electric battery 2 in the previous cycle of use, so as to make the data available for the subsequent cycles. In the particular embodiment shown in the illustrations, the acquisition means 3 coincide with the detection means 4, although the possibility of providing acquisition means 3 and separate detection means cannot be ruled out.

Again, according to the invention, the electric charge accumulator 1 comprises measurement means 5 for measuring the amount of water introduced Lₙ₋₁ in the electric battery 2 for the replenishment of the electrolytic solution after the previous cycle of use.

In fact, these measurement means 5 allow calculating the water introduced into the electric battery 2 in order to monitor the amount of water evaporated during the operation of the electric battery itself.

Advantageously, the measurement means 5 comprise at least one flow rate measuring device 6 for measuring the water introduced into the electric battery 2 which is adapted to measure the flow rate introduced into the electric battery itself at the end of each cycle of use, although the possibility of providing for different types of measurement means 5 cannot be ruled out.

Consequently, the use of the flow rate measuring device 6 implies that the amount of water introduced Lₙ₋₁ coincides with the flow rate of water introduced into the electric battery 2 after a previous cycle of use.

Also according to the invention, the electric charge accumulator 1 comprises processing means 7 operatively connected to the acquisition means 3, to the detection means 4 and to the measurement means 5 and adapted to calculate, depending on the current electric charge Cₙ, the previous electric charge Cₙ₋₁, the amount of water introduced Lₙ₋₁ and the predetermined operating time capacity Lₐ, at least one of a first representative quantity of the consumption of water in the current cycle of use and a second representative quantity of the operating time of the electric battery 2 in the current cycle of use.

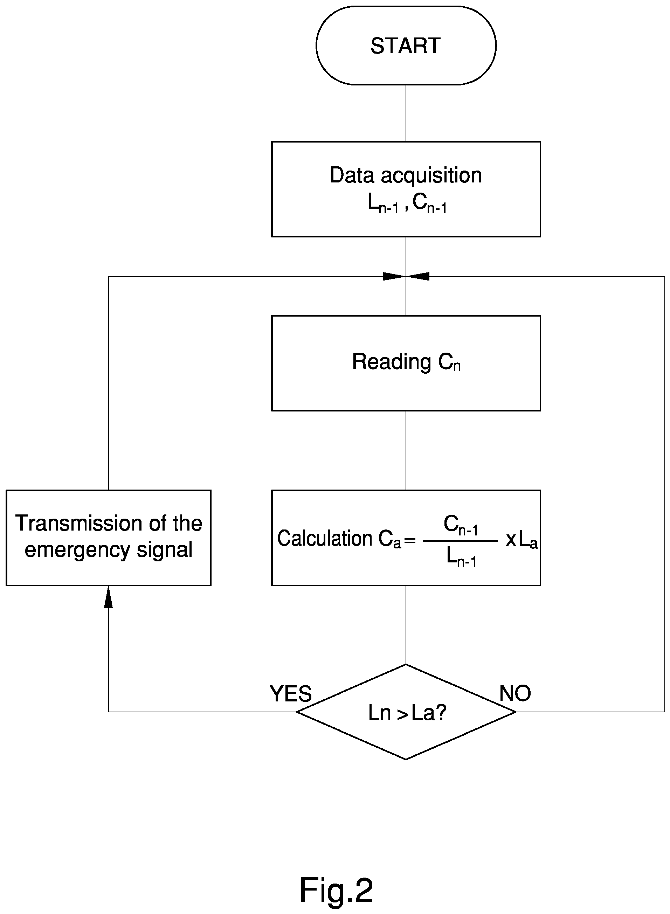

In a first embodiment of the electric charge accumulator 1, the operation of which is schematically shown in Figure 2, the first quantity is an estimate of the amount of water consumed Lₙ by the electric battery 2 in the current cycle of use and the second quantity is coincident with the predetermined operating time capacity Lₐ.

Advantageously, the amount of water to be introduced Lₙ is calculated by the processing means 7 by means of the following formula: ${L}_{n} = \left({L}_{n - 1}/{C}_{n - 1}\right) \times {C}_{n}$ where:
Cₙ is the current electric charge;
Cₙ₋₁ is the previous electric charge;
Lₙ₋₁ is the amount of water introduced.

In practice, the amount of water to be introduced Lₙ at the end of the current cycle of use is equivalent to the amount of water evaporated during the current cycle of use itself.

In order for the electric battery 2 to operate correctly, it is necessary that the amount of water to be introduced Lₙ, i.e. the quantity of water evaporated, is lower than the predetermined operating time capacity Lₐ, so as not to risk to leave the plates uncovered and undergo sulphation.

When, in fact, the amount of water to be introduced Lₙ is higher than the predetermined operating time capacity Lₐ, the conditions of correct operation of the electric charge accumulator 1 are no longer guaranteed, since the level of the electrolytic solution inside the electric battery 2 drops below the threshold value, so it is essential to proceed with the replenishment of water into the electrolytic solution itself.

In addition, the sulphation of the plates results in a reduction in their active surface area and, therefore, a reduction in the speed of the oxido-reduction reactions that take place in the electric battery 2.

Consequently, maintaining a sufficiently high level of electrolytic solution enables high performance to be maintained in terms of the power supplied to the vehicle by the electric charge accumulator 1.

This means that for the electric charge accumulator 1 to operate properly, the amount of water to be introduced Lₙ must be constantly lower than the predetermined operating time capacity Lₐ.

In addition, the ratio between the current electric charge Cₙ and the previous electric charge Cₙ₋₁ is used in the current cycle of use as a correction factor for measuring the amount of water introduced Lₙ₋₁ so as to take into account the statistics of the charge delivered by the electric battery 2.

This measure makes it possible to obtain an electric charge accumulator 1 in which the evolution of the efficiency of the electric battery 2 is taken into account, which efficiency may vary over time due to wear.

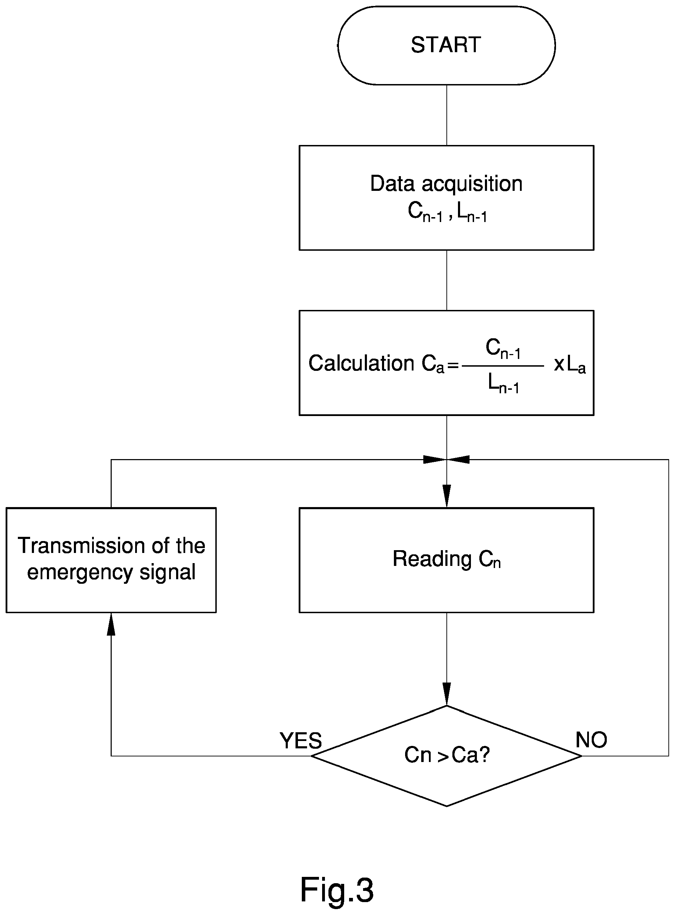

In a second embodiment of the electric charge accumulator 1, the operation of which is schematically shown in Figure 3, the first quantity is coincident with the current electric charge Cₙ and the second quantity is an estimate of the operating time electric charge Cₐ of the electric battery 2 in the current cycle of use.

The operating time electric charge Cₐ is usefully calculated by the processing means 7 by means of the following formula: ${C}_{a} = \left({C}_{n - 1}/{L}_{n - 1}\right) \times {L}_{a}$ where:
Cₙ₋₁ is the previous electric charge;
Lₙ₋₁ is the amount of water introduced;
Lₐ is the predetermined operating time capacity.

In particular, the operating time electric charge Cₐ delivered in the current cycle of use is representative of the total operating time of the electric battery 2 in the cycle of use itself.

As previously discussed, the electric battery 2 is capable of delivering a certain electric charge, which causes the evaporation of a respective amount of water from the electrolytic solution.

The maximum amount of electric charge that can be delivered by the electric battery 2 so that the level of the electrolytic solution is sufficient to ensure the correct operation of the electric charge accumulator 1 is the one that involves the evaporation of an amount of water equal to the predetermined operating time capacity Lₐ, that is the operating time electric charge Cₐ.

In other words, in order for the electric battery 2 to operate properly, it is necessary for the operating time electric charge Cₐ to be lower than the current electric charge Cₙ measured through the acquisition means 3, so as not to risk to leave the plates uncovered and undergo sulphation.

Consequently, in order for the electric charge accumulator 1 to operate properly, the operating time electric charge Cₐ must be higher than the current electric charge Cₙ measured in the current cycle of use.

Additionally, according to the invention, the electric charge accumulator 1 comprises generation means 8 for generating one emergency electronic signal which are operatively connected to the processing means 7.

The possibility of integrating the processing means 7 and the generation means 8 into a single processing unit, such as e.g. one electronic control unit or the like, cannot be ruled out.

These generation means 8 are activated by the processing means 7 when the value of the first quantity is substantially higher than the value of the second quantity, which is a dangerous condition because the electric battery 2 could break and the vehicle could be damaged, resulting in damages of the economic nature.

In addition, the electric charge accumulator 1 comprises at least one long-range transmission device 9 operatively connected to the generation means 8 and adapted to receive the emergency electronic signal and to emit at least one long-range electronic signal for the data transmission.

The emergency electronic signal, therefore, allows the operator to be informed about the potential danger condition and the need to top up the water inside the electric battery 2.

The electric charge accumulator 1 also comprises at least one user interface 10 downloaded onto at least one of a mobile device and a computer and adapted to receive the long-range electronic signal for the provision of data and for data processing.

This user interface 10 comprises storage means which are adapted to record the data provided over time, in order to carry out a statistical analysis of the variation of the electric charge delivered and of the amount of water introduced for each cycle of use.

This way it is possible to inform the user about the malfunction and the emergency condition of the electric charge accumulator 1, make a statistical estimate of the variation of the first quantity and of the second quantity for each cycle of use and draw up a periodic maintenance program, in order to keep the electric battery 2 in the best possible operating conditions, prolong its useful lifespan and improve the performance thereof.

In addition, since the user interface 10 is available on mobile devices and computers, the operator may have real time access to the data relative to the first quantity and to the second quantity sent by the long-range transmission device 9.

Advantageously, the electric charge accumulator 1 comprises at least one short-range transmission device 11 operatively connected to the generation means 8 and adapted to receive the emergency electronic signal and to emit at least one short-range electronic signal for the activation of at least one of a visual signaling device 12 and an acoustic signaling device 13 arranged in the proximity of the electric battery 2, such as e.g. on board the vehicle.

The visual signaling device 12 and the acoustic signaling device 13 are means of communication of the emergency condition and allow drawing the attention of the operator.

These devices in fact are only activated when the value of the first quantity is higher than the value of the second quantity, so that the operator replenishes the water of the electrolytic solution.

The electric charge accumulator 1 usefully comprises blocking means 14 for blocking the vehicle which are operatively connected to the generation means 8 and adapted to prevent the vehicle itself from starting when the value of the first quantity is substantially higher than the value of the second quantity.

In other words, when the amount of electrolytic solution drops below the established lower limit, the generation means 8 provide an electronic alarm signal to the blocking means 14, which, by activating, prevent the vehicle from starting until the level of the electrolytic solution inside the electric battery 2 has been replenished.

This measure ensures that the electric charge accumulator 1 will not be used unless the minimum conditions for its proper operation are met. It also prevents possible vehicle breakdowns due to a possible short circuit of the electric battery 2.

It has in practice been found that the described invention achieves the intended objects.

In this regard, it should be underlined that the special measure of providing an electric charge accumulator according to the invention ensures that no failures and breaks will occur during use.

In addition, the special measure of providing short-range transmission means connected to visual and acoustic signaling devices allows the operator to be warned of the emergency condition so as to carry out the necessary maintenance.

Furthermore, the special measure of providing acquisition means for acquiring the current charge, detection means for detecting the electric charge of an electric battery and measurement means for measuring the amount of water introduced allows monitoring the level of electrolytic solution in real time.

In addition, the special measure of providing long-range transmission means connected to a user interface for the statistical processing of the measurements made makes it possible to draw up a maintenance plan that makes it possible to increase the average lifespan of the electric charge accumulator and improve its performance.

## Claims

1. Electric charge accumulator (1), comprising
- at least one flooded electric battery (2) containing at least one electrolytic solution comprising water and mountable on board a vehicle for the power supply of said vehicle, said electric battery (2) having a predetermined operating time capacity (Lₐ); **characterized in** comprising:
- acquisition means (3) for acquiring the current electric charge (Cₙ) delivered by said electric battery (2) in a current cycle of use;
- detection means (4) for detecting the previous electric charge (Cₙ₋₁) delivered by said electric battery (2) in a previous cycle of use;
- measurement means (5) for measuring the amount of water introduced (Lₙ₋₁) in said electric battery (2) for the restoration of said electrolytic solution after said previous cycle of use;
- processing means (7) operatively connected to said acquisition means (3), to said detection means (4) and to said measurement means (5) and adapted to calculate, depending on said current electric charge (Cₙ), said previous electric charge (Cₙ₋₁), said amount of water introduced (Lₙ₋₁) and said predetermined operating time capacity (Lₐ), at least one of a first representative quantity of the consumption of said water in said current cycle of use and a second representative quantity of the operating time of said electric battery (2) in said current cycle of use;
- generation means (8) for generating at least one emergency electronic signal which are operatively connected to said processing means (7), said generation means (8) being activated when the value of said first quantity is substantially higher than the value of said second quantity.

2. Electric charge accumulator (1) according to claim 1, **characterized by** the fact that said first quantity is an estimate of the amount of water consumed (Lₙ) by said electric battery (2) in said current cycle of use and said second quantity is coincident with said predetermined operating time capacity (Lₐ).

3. Electric charge accumulator (1) according to claim 2, **characterized by** the fact that said processing means (7) are adapted to calculate said amount of water to be introduced (Lₙ) by means of the following formula: ${L}_{n} = \left({L}_{n - 1}/{C}_{n - 1}\right) \times {C}_{n}$ where:
(Cₙ) is the current electric charge;
(Cₙ₋₁) is the previous electric charge;
(Lₙ₋₁) is the amount of water introduced.

4. Electric charge accumulator (1) according to claim 1, **characterized by** the fact that said first quantity is coincident with said current electric charge (Cₙ) and said second quantity is an estimate of the operating time electric charge (Cₐ) of said electric battery (2) in said current cycle of use.

5. Electric charge accumulator (1) according to claim 4, **characterized by** the fact that said processing means (7) are adapted to calculate said operating time electric charge (Cₐ) by means of the following formula: ${C}_{a} = \left({C}_{n - 1}/{L}_{n - 1}\right) \times {L}_{a}$ where:
(Cₙ₋₁) is the previous electric charge;
(Lₙ₋₁) is the amount of water introduced;
(Lₐ) is the predetermined operating time capacity.

6. Electric charge accumulator (1) according to one or more of the preceding claims, **characterized by** the fact that it comprises at least one long-range transmission device (9) operatively connected to said generation means (8) and adapted to receive said emergency electronic signal and to emit at least one long-range electronic signal for the data transmission.

7. Electric charge accumulator (1) according to one or more of the preceding claims, **characterized by** the fact that it comprises at least one user interface loaded onto at least one of a mobile device and a computer and adapted to receive said long-range electronic signal for the provision of data and to process said data.

8. Electric charge accumulator (1) according to one or more of the preceding claims, **characterized by** the fact that said user interface comprises storage means adapted to record said data over time for the statistical analysis of the variation of said amount of water introduced (Lₙ₋₁).

9. Electric charge accumulator (1) according to one or more of the preceding claims, **characterized by** the fact that it comprises at least one short-range transmission device (11) operatively connected to said generation means (8) and adapted to receive said emergency electronic signal and to emit at least one short-range electronic signal for the activation of at least one of a visual signaling device (12) and an acoustic signaling device (13) arranged in the proximity of said electric battery (2).

10. Electric charge accumulator (1) according to one or more of the preceding claims, **characterized by** the fact that it comprises blocking means (14) for blocking said vehicle when operatively connected to said generation means (8) and adapted to prevent said vehicle, when connected, from starting when the value of said first quantity is substantially higher than the value of said second quantity.

## Patentansprüche

1. Elektrischer Ladungsakkumulator (1), umfassend:
- mindestens eine geflutete elektrische Batterie (2), die mindestens eine Elektrolytlösung enthält, die Wasser umfasst und an Bord eines Fahrzeugs für die Stromversorgung des Fahrzeugs montierbar ist, wobei die elektrische Batterie (2) eine vorbestimmte Betriebszeitkapazität (Lₐ) aufweist; **dadurch gekennzeichnet, dass** sie umfasst:
- Erfassungsmittel (3) zum Erfassen der aktuellen elektrischen Ladung (Cₙ), die von der elektrischen Batterie (2) in einem aktuellen Nutzungszyklus geliefert wird;
- Erkennungsmittel (4) zum Erkennen der vorhergehenden elektrischen Ladung (Cₙ₋₁), die von der elektrischen Batterie (2) in einem vorhergehenden Nutzungszyklus abgegeben wurde;
- Messmittel (5) zum Messen der Wassermenge (Lₙ₋₁), die in die elektrische Batterie (2) zur Wiederherstellung der elektrolytischen Lösung nach dem vorhergehenden Verwendungszyklus eingeleitet wird;
- Verarbeitungsmittel (7), die operativ mit den Erfassungsmitteln (3), den Erkennungsmitteln (4) und den Messmitteln (5) verbunden sind und geeignet sind, in Abhängigkeit von der aktuellen elektrischen Ladung (Cₙ), der vorherigen elektrischen Ladung (Cₙ₋₁), der eingeleiteten Wassermenge (Lₙ₋₁) und der vorbestimmten Betriebszeitkapazität (Lₐ) mindestens eine erste repräsentative Größe des Wasserverbrauchs im aktuellen Nutzungszyklus und eine zweite repräsentative Größe der Betriebszeit der elektrischen Batterie (2) im aktuellen Nutzungszyklus zu berechnen;
- Erzeugungsmittel (8) zum Erzeugen mindestens eines elektronischen Notsignals, die betriebsmäßig mit den Verarbeitungsmitteln (7) verbunden sind, wobei die Erzeugungsmittel (8) aktiviert werden, wenn der Wert der ersten Größe wesentlich höher ist als der Wert der zweiten Größe.

2. Elektrischer Ladungsakkumulator (1) nach Anspruch 1, **dadurch gekennzeichnet, dass** die erste Größe eine Schätzung der Wassermenge (Lₙ) ist, die von der elektrischen Batterie (2) in dem aktuellen Nutzungszyklus verbraucht wird, und dass die zweite Größe mit der vorbestimmten Betriebszeitkapazität (Lₐ) zusammenfällt.

3. Elektrischer Ladungsakkumulator (1) nach Anspruch 2, **dadurch gekennzeichnet, dass** die Verarbeitungsmittel (7) so ausgelegt sind, die Menge des einzuleitenden Wassers (Lₙ) mit Hilfe der folgenden Formel zu berechnen: ${L}_{n} = \left({L}_{n - 1}/{C}_{n - 1}\right) \times {C}_{n}$ wobei:
(Cₙ) die aktuelle elektrische Ladung ist;
(Cₙ₋₁) die vorherige elektrische Ladung ist;
(Lₙ₋₁) die eingeleitete Wassermenge ist.

4. Elektrischer Ladungsakkumulator (1) nach Anspruch 1, **dadurch gekennzeichnet, dass** die erste Größe mit der aktuellen elektrischen Ladung (Cₙ) zusammenfällt und die zweite Größe eine Schätzung der elektrischen Ladung (Cₐ) der elektrischen Batterie (2) während der Betriebszeit in dem aktuellen Nutzungszyklus ist.

5. Elektrischer Ladungsakkumulator (1) nach Anspruch 4, **dadurch gekennzeichnet, dass** die Verarbeitungsmittel (7) so ausgelegt sind, die elektrische Ladung (Cₐ) während der Betriebszeit mit Hilfe der folgenden Formel zu berechnen ${C}_{a} = \left({C}_{n - 1}/{L}_{n - 1}\right) \times {L}_{a}$ wobei:
(Cₙ₋₁) die vorherige elektrische Ladung ist;
(Lₙ₋₁) die eingeleitete Wassermenge ist;
(Lₐ) die vorgegebene Betriebszeitkapazität ist.

6. Elektrischer Ladungsakkumulator (1) nach einem oder mehreren der vorhergehenden Ansprüche, **dadurch gekennzeichnet, dass** er mindestens eine Übertragungsvorrichtung (9) mit großer Reichweite umfasst, die funktionell mit den Erzeugungsmitteln (8) verbunden ist und geeignet ist, das elektronische Notsignal zu empfangen und mindestens ein elektronisches Signal mit großer Reichweite für die Datenübertragung auszusenden.

7. Elektrischer Ladungsakkumulator (1) nach einem oder mehreren der vorhergehenden Ansprüche, **dadurch gekennzeichnet, dass** er mindestens eine Benutzerschnittstelle umfasst, die auf mindestens eines von einem mobilen Gerät und einem Computer geladen ist und geeignet ist, das elektronische Signal mit großer Reichweite für die Bereitstellung von Daten zu empfangen und die Daten zu verarbeiten.

8. Elektrischer Ladungsakkumulator (1) nach einem oder mehreren der vorhergehenden Ansprüche, **dadurch gekennzeichnet, dass** die Benutzerschnittstelle Speichermittel umfasst, die geeignet sind, die Daten im Laufe der Zeit für die statistische Analyse der Veränderung der eingeleiteten Wassermenge (Lₙ₋₁) aufzuzeichnen.

9. Elektrischer Ladungsakkumulator (1) nach einem oder mehreren der vorhergehenden Ansprüche, **dadurch gekennzeichnet, dass** er mindestens eine Übertragungsvorrichtung mit kurzer Reichweite (11) umfasst, die funktionell mit den Erzeugungsmitteln (8) verbunden ist und geeignet ist, das elektronische Notsignal zu empfangen und mindestens ein elektronisches Signal mit kurzer Reichweite zur Aktivierung mindestens eines von einer optischen Signalvorrichtung (12) und einer akustischen Signalvorrichtung (13) auszusenden, die in der Nähe der elektrischen Batterie (2) angeordnet sind.

10. Elektrischer Ladungsakkumulator (1) nach einem oder mehreren der vorhergehenden Ansprüche, **dadurch gekennzeichnet, dass** er Blockiermittel (14) umfasst, um das Fahrzeug zu blockieren, wenn es betriebsmäßig mit den Erzeugungsmitteln (8) verbunden ist, und die geeignet sind, das Fahrzeug, wenn es angeschlossen ist, am Starten zu hindern, wenn der Wert der ersten Größe wesentlich höher ist als der Wert der zweiten Größe.

## Revendications

1. Accumulateur de charge électrique (1), comprenant
- au moins une batterie électrique noyée (2) contenant au moins une solution électrolytique comprenant de l'eau et pouvant être montée à bord d'un véhicule pour l'alimentation en puissance dudit véhicule, ladite batterie électrique (2) ayant une capacité de durée de fonctionnement (Lₐ) ; **caractérisé en ce qu'**il comprend :
- des moyens d'acquisition (3) pour acquérir la charge électrique actuelle (Cₙ) délivrée par ladite batterie électrique (2) dans un cycle d'utilisation actuel ;
- des moyens de détection (4) pour détecter la charge électrique précédente (Cₙ₋₁) délivrée par ladite batterie électrique (2) dans un cycle d'utilisation précédent ;
- des moyens de mesure (5) pour mesurer la quantité d'eau introduite (Lₙ₋₁) dans ladite batterie électrique (2) pour la restauration de ladite solution électrolytique après ledit cycle d'utilisation précédent ;
- des moyens de traitement (7) connectés fonctionnellement auxdits moyens d'acquisition (3), auxdits moyens de détection (4) et auxdits moyens de mesure (5) et adaptés pour calculer, en fonction de ladite charge électrique actuelle (Cₙ), de ladite charge électrique précédente (Cₙ₋₁), de ladite quantité d'eau introduite (Lₙ₋₁) et de ladite capacité de durée de fonctionnement (Lₐ) prédéterminée, au moins l'une parmi une première quantité représentative de la consommation de ladite eau dans ledit cycle d'utilisation actuel et une seconde quantité représentative de la durée de fonctionnement de ladite batterie électrique (2) dans ledit cycle d'utilisation actuel ;
- des moyens de génération (8) pour générer au moins un signal électronique d'urgence qui sont connectés fonctionnellement auxdits moyens de traitement (7), lesdits moyens de génération (8) étant activés lorsque la valeur de ladite première quantité est sensiblement supérieure à la valeur de ladite seconde quantité.

2. Accumulateur de charge électrique (1) selon la revendication 1, **caractérisé en ce que** ladite première quantité est une estimation de la quantité d'eau consommée (Lₙ) par ladite batterie électrique (2) dans ledit cycle d'utilisation actuel et que ladite seconde quantité est coïncidente avec ladite capacité de durée de fonctionnement (Lₐ) prédéterminée.

3. Accumulateur de charge électrique (1) selon la revendication 2, **caractérisé en ce que** lesdits moyens de traitement (7) sont adaptés pour calculer ladite quantité d'eau à introduire (Lₙ) au moyen de la formule suivante : ${L}_{n} = \left({L}_{n - 1}/{C}_{n - 1}\right) \times {C}_{n}$ où :
(Cₙ) est la charge électrique actuelle ;
(Cₙ₋₁) est la charge électrique précédente ;
(Lₙ₋₁) est la quantité d'eau introduite.

4. Accumulateur de charge électrique (1) selon la revendication 1, **caractérisé en ce que** ladite première quantité est coïncidente avec ladite charge électrique actuelle (Cₙ) et que ladite seconde quantité est une estimation de la charge électrique de durée de fonctionnement (Cₐ) de ladite batterie électrique (2) dans ledit cycle d'utilisation actuel.

5. Accumulateur de charge électrique (1) selon la revendication 4, **caractérisé en ce que** lesdits moyens de traitement (7) sont adaptés pour calculer ladite charge électrique de durée de fonctionnement (Cₐ) au moyen de la formule suivante : ${C}_{a} = \left({C}_{n - 1}/{L}_{n - 1}\right) \times {L}_{a}$ où :
(Cₙ₋₁) est la charge électrique précédente ;
(Lₙ₋₁) est la quantité d'eau introduite ;
(Lₐ) est la capacité de durée de fonctionnement prédéterminée.

6. Accumulateur de charge électrique (1) selon une ou plusieurs des revendications précédentes, **caractérisé en ce qu'**il comprend au moins un dispositif de transmission de longue portée (9) connecté fonctionnellement auxdits moyens de génération (8) et adapté pour recevoir ledit signal électronique d'urgence et pour émettre au moins un signal électronique de longue portée pour la transmission de données.

7. Accumulateur de charge électrique (1) selon une ou plusieurs des revendications précédentes, **caractérisé en ce qu'**il comprend au moins une interface utilisateur chargée sur au moins l'un parmi un dispositif mobile et un ordinateur et adaptée pour recevoir ledit signal électronique de longue portée pour la fourniture de données et pour traiter lesdites données.

8. Accumulateur de charge électrique (1) selon une ou plusieurs des revendications précédentes, **caractérisé en ce que** ladite interface utilisateur comprend des moyens de stockage adaptés pour enregistrer lesdites données dans le temps pour l'analyse statistique de la variation de ladite quantité d'eau introduite (Lₙ₋₁).

9. Accumulateur de charge électrique (1) selon une ou plusieurs des revendications précédentes, **caractérisé en ce qu'**il comprend au moins un dispositif de transmission de courte portée (11) connecté fonctionnellement auxdits moyens de génération (8) et adapté pour recevoir ledit signal électronique d'urgence et pour émettre au moins un signal électronique de courte portée pour l'activation d'au moins l'un parmi un dispositif de signalisation visuelle (12) et un dispositif de signalisation acoustique (13) agencés à proximité de ladite batterie électrique (2).

10. Accumulateur de charge électrique (1) selon une ou plusieurs des revendications précédentes, **caractérisé en ce qu'**il comprend des moyens de blocage (14) pour bloquer ledit véhicule lorsqu'ils sont connectés fonctionnellement auxdits moyens de génération (8) et adaptés pour empêcher ledit véhicule, lorsqu'ils sont connectés, de démarrer lorsque la valeur de ladite première quantité est sensiblement supérieure à la valeur de ladite seconde quantité.
